# EUROPEAN PATENT SPECIFICATION

(11) **EP 4 017 262 B1**
(45) Date of publication and mention of the grant of the patent: **27.05.2026**
(21) Application number: 20858469.8
(22) Date of filing: 21.08.2020
(51) Int. Cl.: A01N 1/143, A01N 1/146

(54) **PRESSURIZED SYSTEM FOR TISSUE TRANSPORT AND PRESERVATION**
DRUCKSYSTEM ZUM TRANSPORT UND ZUR KONSERVIERUNG VON GEWEBE
SYSTÈME PRESSURISÉ POUR LE TRANSPORT ET LA CONSERVATION DE TISSU

(30) Priority: 23.08.2019 US 201962890877 P
(43) Date of publication of application: 29.06.2022
(73) Proprietor: Paragonix Technologies, Inc., Waltham, MA 02451 (US)
(72) Inventor: ANDERSON, Lisa, Maria, Cambridge, MA 02142 (US); JUDSON, Jared, Alden, Medford, MA 02155 (US); EDELMAN, William, Sharon, MA 02067 (US)
(74) Representative: Barker Brettell LLP
(86) International application number: PCT/US2020/047324
(87) International publication number: WO 2021/041181

(56) References cited:
- WO-A2-2012/125782
- US-A1- 2009 240 277
- US-A1- 2010 112 542
- US-A1- 2011 212 431
- US-A1- 2012 264 104
- US-A1- 2012 309 078
- US-A1- 2018 352 807

## Description

### Technical Field

The disclosure relates to systems and methods for the storage and transportation of bodily tissue.

### Background

The current invention generally relates to devices, systems, and methods for extracorporeal preservation of bodily tissue. Extracorporeal preservation of bodily tissue is essential in transplant procedures so that donor tissue can be transported to a recipient in a remote location. In order to provide the best graft survival rates, donor tissues must be matched to appropriate recipients. Because of the sudden nature of most tissue donation events, appropriate recipients must be rapidly located and must be within a limited geographic area of the donor. Time limitations on the extracorporeal viability of donor tissue can lead to less than ideal tissue matching and, worse, wasted donor tissue. Prolonging the viability of donor tissue can allow for better matching between donor tissue and recipients and, in turn, can increase graft survival rates and increase availability of donor tissue to the growing waitlists of individuals in need of transplants.

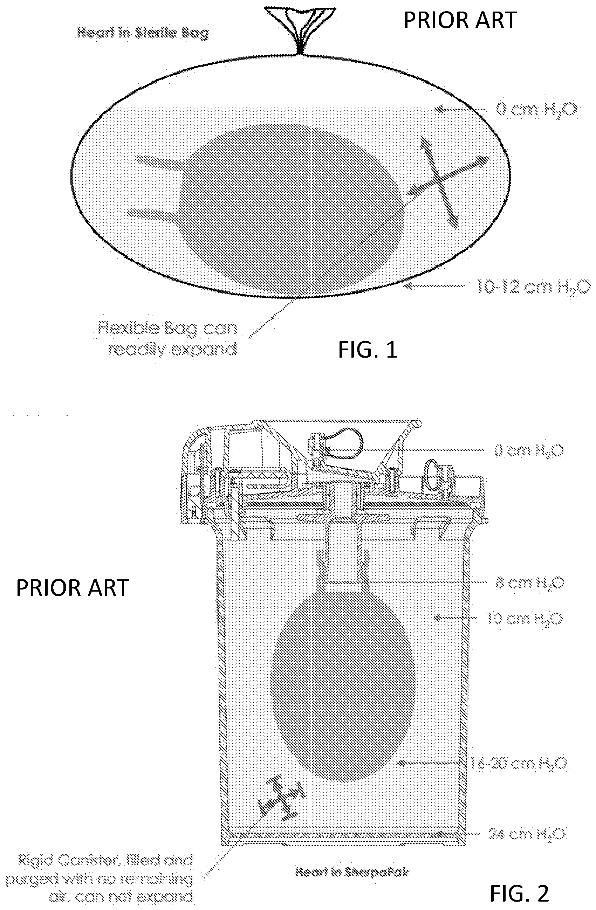

The most prevalent current technique for preserving a bodily tissue for transplantation is static cold storage. While hypothermic temperatures decrease the oxygen demand of the bodily tissue, the tissue's viability is still time-limited by insufficient oxygen levels to meet the tissue's decreased metabolic needs. An example of static cold storage is shown in FIG. 1. An organ, such as a heart, is placed in a sterile bag along with a preservation fluid. Of note, the bags are generally constructed of a flexible material and the closed bag contains air. Because the bag is flexible and not purged of air, the organ inside is not subjected to any significant pressure in the preservation fluid (e.g., 0 - 12 cm H₂O).

Another storage and transport system is shown in FIG. 2 using techniques described in U.S. Pat. No. 9,426,979. Such systems use a rigid container configured to purge excess fluid during filling such that the container is completely filled with preservation fluid with no air. The rigid container, purged of air, is able to maintain the tissue at a set depth of fluid, thereby resulting in a fluid pressure on the organ of about 8 - 20 cm H₂O along the length of the organ.

A major limitation of hypothermic storage techniques, including those shown in FIGS. 1 and 2, is the tendency to cause edema, or the accumulation of fluid within the bodily tissue. The level of edema generally increases with the length of hypothermic storage, providing another limitation on the amount of time that a tissue can be stored and remain viable.

WO2012/125782 A2 discloses an apparatus configured to oxygenate and perfuse a bodily tissue for extracorporeal preservation of the bodily tissue. The apparatus comprises a canister, a lid including a purge port, and a fill port, wherein the canister and a lower surface of the lid define an organ chamber. The floor of the canister is configured to flex when a first pressure within the organ chamber is increased to a second pressure.

### Summary of the Invention

The scope of the invention is set out in the appended claims. Systems and methods of the invention are directed to increasing donor tissue viability during and after storage and transport. In particular, systems and methods relate to storage and transport of organs with increased pressure. Systems and methods of the invention recognize that increased pressure, combined with controlled, hypothermic temperatures reduce organ edema or swelling during transport and thereby improve the condition of organs at implantation. Organ containers described herein include perfusion and static systems using rigid containers similar to those shown in FIG. 2 and described above from which air can be purged.

Methods of the invention include filling the container from an elevated source of preservation fluid. Elevating the fluid source and purging air from the container results in an increased pressure in the system just as water pressure increases at greater depths in the ocean. However, due to the relative incompressibility of the fluid and the lack of flexibility in the container, there is little ability using existing techniques to capture and retain that pressure once the system has been filled.

Systems and methods of the invention include the addition of a pressurizing element added to the container system to introduce a compressible element and, thereby capture and maintain the pressure developed during filling of the container throughout storage and transport.

In the present disclosure various pressurizing elements are contemplated including in-line pressurizers with spring-energized bellows, elastomeric balloons, or floating spring or gas-energized bellows. Any capable of introducing an element of increased volumetric compliance into the otherwise rigid container system can be used. According to the invention, however, the pressurizer comprises an elastomeric material resistant to expansion and disposed in a fill line between a fill valve and a fill port. In certain embodiments, the container may be plastic but inelastic such that the container becomes rigid as it is completely filled with preservation fluid.

Aspects of the invention include methods for loading an organ into and filling a container of the invention in order to apply pressure to the stored organ. Methods include using a container with a purge port at the highest level of the container to allow all air to escape and to be replaced with fluid during filling. Such containers are described, for example, and as noted above, in U.S. Pat. No. 9,426,979. Fluid can be added to the container through a fill line and can be added at a desired pressure (e.g., 25 to 50 cm H₂O) for organ storage and transport. The line pressure can be maintained through, for example, a pump or compressor, or, as in preferred embodiments, through elevation of the fluid source above the container during filling. A fill valve in the line can be opened during filling and, once all air has been purged and the pressurizer has been energized (e.g., expanded to accommodate the fill pressure), can be closed to create a fluid-tight system within the container at an increased pressure. The pressurizer must resist expansion such that its resistance maintains the pressure in the system. After the fill valve has been closed and the system sealed, the fill line can be disconnected from the sealed container system and the organ is ready for transport.

In certain embodiments, the desired pressure range is between about 25 to about 50 cm H₂O (equivalent to 18.4 - 36.8 mmHg, 0.36-0.71 psig, or 0.024-0.048 atm). The pressure may vary according to the type, size, and condition of the organ. In order to create and maintain pressures in the above ranges using an elevated fluid source, that source can be suspended 50 cm or more above the container during filling procedures. Pressurized systems can be operable to counteract osmotic pressure in the preservation fluid or in the stored tissue. Accordingly, edema can be reduced. In various embodiments, the relationship of osmotic pressure to the pressure in the preservation fluid can be manipulated to drive preservation fluid into the tissue, draw fluid out of the tissue, or maintain a desired fluid level in the tissue (e.g., to prevent edema).

Systems and methods of the invention have application in both static cold storage devices and hypothermic machine perfusion devices. In certain embodiments, hypothermic machine perfusion devices are configured to oxygenate and perfuse a bodily tissue for extracorporeal preservation of the bodily tissue. The perfusion apparatuses can include a pneumatic system, a pumping chamber, and an organ chamber. The pneumatic system may be configured for the controlled delivery of fluid to and from the pumping chamber based on a predetermined control scheme. The predetermined control scheme can be, for example, a time-based control scheme or a pressure-based control scheme. The pumping chamber is configured to diffuse a gas into a perfusate and to generate a pulse wave for moving the perfusate through a bodily tissue. The organ chamber is configured to receive the bodily tissue and the perfusate. The organ chamber is configured to substantially automatically purge excess fluid from the organ chamber to the pumping chamber. The pumping chamber may be configured to substantially automatically purge excess fluid from the pumping chamber to an area external to the apparatus.

### Brief Description of the Drawings

FIG. 1 shows a prior art organ transport arrangement.
FIG. 2 shows a prior art organ transport canister.
FIG. 3A shows an organ transport system with an unengaged bellows-type pressurizer in the fill neck.
FIG. 3B shows an organ transport system with an engaged bellows-type pressurizer in the fill neck.
FIG. 4 shows an exemplary method of filling and pressurizing an organ transport canister.
FIG. 5A shows an organ transport system with an un-engaged bellows-type pressurizer in the canister.
FIG. 5B shows an organ transport system with an engaged bellows-type pressurizer in the canister.
FIG. 6A shows an organ transport system with an un-engaged balloon-type pressurizer in the fill neck.
FIG. 6B shows an organ transport system with an engaged balloon-type pressurizer in the fill neck.
FIG. 7 shows a free-floating bellows-type pressurizer.
FIG. 8A shows an organ transport system with an un-engaged free-floating bellows-type pressurizer in the canister.
FIG. 8B shows an organ transport system with an engaged free-floating bellows-type pressurizer in the canister.

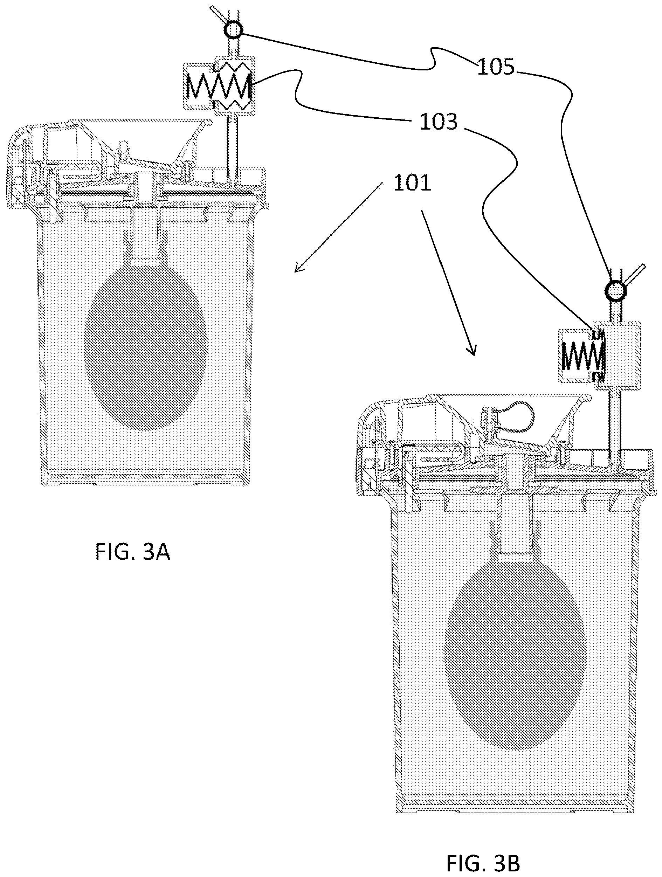

The embodiments illustrated in figures 3A-B, 4, 5A-B, 7 and 8A-B are outside the scope of the claims, but useful for understanding the present invention.

### Detailed Description

Devices, systems and methods are described herein that are configured for extracorporeal preservation and transportation of bodily tissue. Specifically, devices and methods for creating and maintaining pressure within organ storage and transport containers are described. Systems and methods can be used to reduce edema in transported organs by maintaining an increased pressure in the surrounding fluid to prevent swelling by applying a compressive force to the organ. It is thought that the increased pressure further approximates the internal conditions of the human body to which the organ is usually subjected, thereby prolonging organ viability during storage and transport.

A controlled thermal environment can be maintained for the organ through the use of a rigid container completely filled with preservation fluid and purged of air. Systems can be filled with fluid at an increased pressure derived from mechanical pumping or through elevation of the fluid source. In order to adjust and maintain a desired pressure in the range of about 25 to about 50 cm H₂O given a rigid container and a relatively incompressible fluid within the container, systems and methods of the invention use a pressurizer to introduce a desired level of volumetric compliance. The resistance to compression in bellows-type pressurizers or to expansion in balloon-type pressurizers can be selected to achieve and maintain the desired pressure within the system. The resistance can manipulated as a function of material choice, spring-rate, gas volume (e.g., in gas-energized bellows) to achieve the desired pressure within the system.

As shown in FIGS. 1 and 2 and noted above, rigid containers, purged of air (FIG. 2), provide benefits over typical bags (FIG. 1). Specifically, the container shown in FIG. 2 and similar containers detailed in U.S. Pat. No. 9,426,979 provide significant advantages in temperature control for the enclosed environment and also provide a deeper fluid well resulting in greater bulk pressure of the fluid on the organ in the canister embodiments in FIG. 2. Observations using canisters similar to that shown in FIG. 2 indicate that factors other than temperature control are contributing to better-than-expected organ condition following transport. Upon examination, it is believed that the greater fluid pressure in the canister reduces organ edema and contributing to the positive results.

In order to generate and maintain greater pressure (above the 8-20 cm H₂O observed in rigid canisters such as shown in FIG. 2), systems and methods of the present disclosure use a variety of pressurizers, examples of which are shown in FIGS. 3 and 5-8.

Two components can be added to a purging canister transport system such as shown in FIG. 2 to achieve the desired pressures. First, a compliant, compressible pressurizer element, wetted on one side (internally or externally) and energized by elastic deformation (of metal, elastomer, or gas). Second, a fill valve can be added at a fill port or along fill line in order to close off and capture the in-line pressure of a fluid during filling. Any valve can be used including manually controlled ball, butterfly, choke, diaphragm, gate, globe, knife, needle, pinch, piston, or plug valve. In certain embodiments a simple rolling clamp such as used on intra-venous tubing may be used on the fill line. In some embodiments, a leak-proof quick-disconnect coupling may alternatively be used for the fill valve. In some embodiments an automatic one-way check valve may be used to allow fluid to flow in until the pressure is equalized across the system and flow stops. In such embodiments, the purge valve must be closed once the system has filled with fluid and all air has been purged from the canister to prevent further outflow of fluid and allow pressure to build in the container.

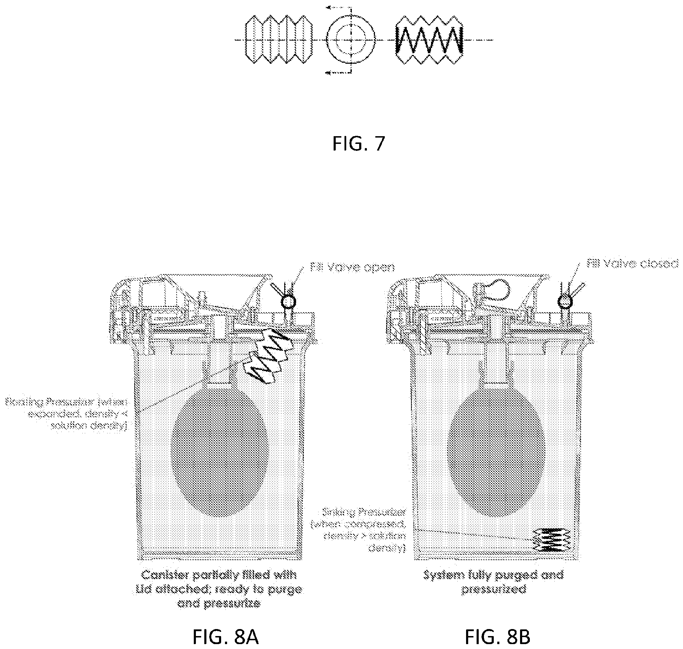

An exemplary pressurizer element is shown in FIG. 7 comprising a bellows configured to compress in response to external pressure. The pressurizer element resists compression and, through that resistance, maintains a pressure in the surrounding fluid by reducing the volume that the fluid would otherwise fill. The resistance of the pressurizer may be provided through the use of an elastomeric material such as a medical-grade rubber or may be imparted by a spring contained within the pressurizer element as shown in FIG. 7. In some embodiments the pressurizer may be filled with a compressible gas and the resistance of that gas to compression can impart the resistance to volumetric expansion of the container and the resulting increased fluid pressure therein. The resistance and range of travel should be selected to correspond to the desired range of pressures desired in the container during transport such that the pressurizer is responsive to the in-line filling pressure but does not fully compress or expand upon exposure to the pressure ranges discussed herein.

The bellows may rely on inherent shape memory in the material of the bellows itself to provide resistance to expansion or compression or may use, for example, springs opposing the expansion or compression of the bellows via compression or tension. Any known spring type may be used including coiled materials or elastic bands to provide expansion resistance. The expansion- or compression-resisting force may be a single rate or may be progressive or adjustable. In various embodiments, a constant force spring can be used to maintain system pressure. Constant force springs are springs for which the force they exert over their range of motion is relatively constant. Constant force springs may be constructed from rolled ribbons of, for example, spring steel.

In certain embodiments, the pressurizer can, instead of passively maintaining pressure, be used to actively create pressure by, for example, manually compressing a bellows-type pressurizer, filling the container with fluid, sealing the container, and manually releasing the compressed pressurizer. The pressurizer can thereby create additional pressure above the in-line pressure of the fill fluid.

FIG. 3 shows an in-Line pressurizer 103 using a spring-energized bellows in unengaged (FIG. 3A) and engaged or energized (FIG. 3B) configurations. The bellows are externally wetted meaning that external fluid pressure compresses the bellows. In FIG. 3A the fill valve 105 is opened, allowing fluid to fill the container 101 until all air is purged from the system through a one-way purge port in the container lid. In FIG. 3B, the purge port has closed and the container 101 is filled with fluid. The pressurizer 103 has compressed in response to the in-line pressure from the fluid. The fill valve 105 has been closed, thereby trapping the fill pressure within the container 101. That pressure is maintained by the expanding force of the pressurizer 103. The in-line pressure of the fluid can be imparted through elevation of the fluid source above the container 101 or through mechanical pumping or other pressurizing means.

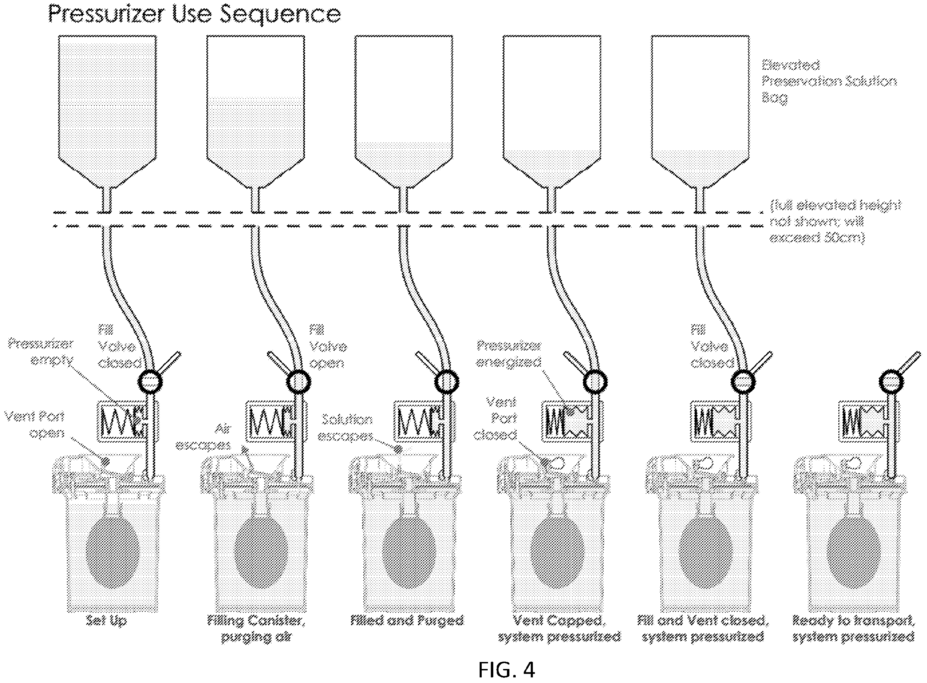

An exemplary filling procedure according the certain methods is illustrated in FIG. 4. An elevated fluid source (in the illustrated case, a bag of preservation solution) is used to create in-line fluid pressure. The fluid source can be elevated at least 50 cm above the container. The final distance can be selected based on the final transportation pressure desired in the container. The pressurizer, as shown in FIG. 4, is an internally-wetted spring-energized bellows. As opposed to the externally-wetted bellows shown in FIG. 3, the internally wetted bellows is compressed by the energizing spring and expands in response to fluid pressure on the inside of the bellows. The spring resists the expansion and maintains the pressure in the system once the fill valve is closed.

During set-up in FIG. 4, the elevated fluid source is connected, via the in-line fill valve, to the container system with the organ therein, the lid sealed, the vent port open, and the pressurizer empty. The fill valve is opened to allow fluid to enter the system. As fluid fills the system, trapped air escapes through the open vent port (or purge port or valve) in the container lid. When all the air has been purged, fluid will escape through the vent port. In response to observing fluid escaping through the vent port, a user can close the vent port. Alternatively, an automatic vent port can be used for example comprising a material that, when wetted, expands to close the port.

Once the vent port is closed, pressure will be allowed to build within the system to equal the in-line pressure caused by the elevated fluid source. The pressurizer will thereby be energized, expanding (or compressing in other embodiments) in response to the force of the fluid pressure within the system. Once the pressurizer is energized, the fill valve can be closed, thereby sealing the system and maintaining a pressure within the container equal to the in-line pressure from the elevated fluid source through the spring-energized resistance of the pressurizer. A pressure gauge can be positioned along the system (e.g., on the canister, on the fill line, or in the pressurizer to allow for monitoring and management of the internal pressure in the canister during set up and transport. In certain embodiments, the pressurizer may be variably compliant (e.g., have an externally adjustable spring rate) to allow pressure to be changed within the system after the container is filled and sealed.

After the fill valve is closed, the fill line to the fluid source can be disconnected and the container is ready for transport.

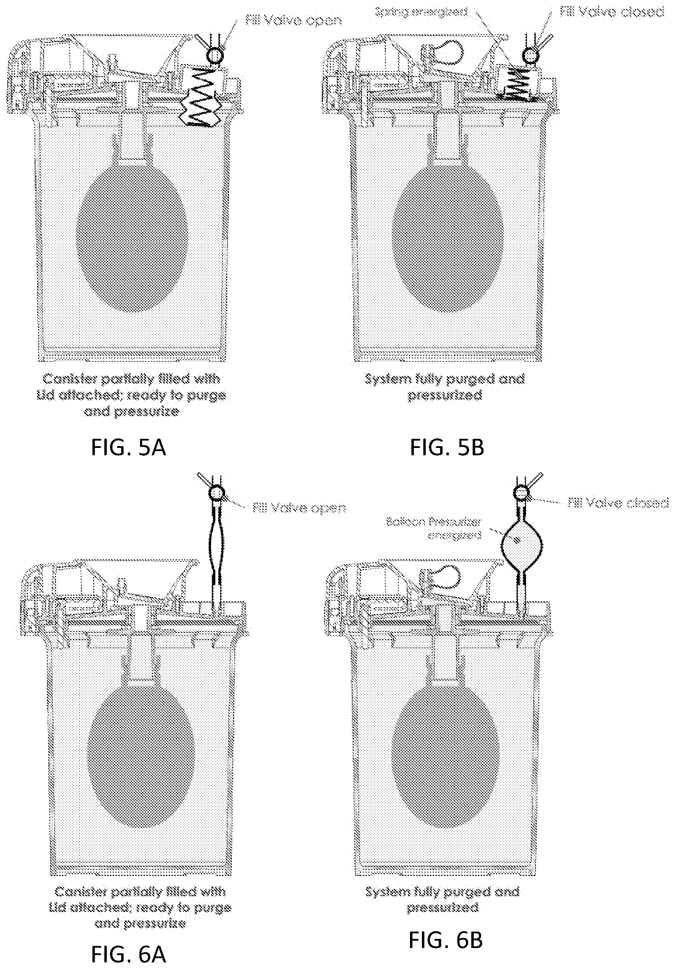

FIGS. 5A and 5B show an in-lid pressurizer using an externally-wetted, spring-energized bellows affixed to the lid and extending into the organ compartment. Externally-wetted pressurized bellows are inherently stable and are resistant to buckling. In FIG. 5A the fill valve is open and the pressurizer has not been energized. FIG. 5B shows an energized pressurizer in response to the in-line pressure from the fill line where the fill valve has been closed to trap in the fluid pressure.

FIGS. 6A and 6 B show an in-line pressurizer using an elastomeric balloon which inflates during the filling process and is energized by stretching of the in-line material (e.g., the balloon). The material's inherent resistance to expansion or stretching provides the resistance to mechanically maintain the pressure in the system once the fill valve is closed as in FIG. 6B. FIG. 6A shows an un-expanded pressurizer and open fill valve during the filling process. In certain embodiments, outside the scope of the claims, the container itself may comprise an elastomeric balloon in which the tissue or organ is disposed before filling with preservation fluid. The walls of the container can therefore act as a pressurizer capturing the fluid pressure during filling through expansion against an elastic resistance.

FIGS. 8A and 8B show a floating pressurizer using either a spring-energized or gas-energized bellows. The pressurizer may be designed such that it sinks when compressed giving a clear visual indication that the system is properly pressurized. In order to accomplish that, the density of the pressurizer when compressed should be greater than the density of the pressurized solution. The floating pressurizer can be tethered to the surface of the container to prevent contact with the organ and potential damage thereto during transport.

Materials for valves and pressurizers, wherever surfaces may contact the preservation fluid or the organ to be transported, should be selected based on biocompatibility and inertness with respect to the preservation fluid. Considerations such as sterility and ability to be sterilized are also used in material selection.

## Claims

1. A system for storage of an organ, the system comprising:
a sealable organ container comprising a vent port, an internal volume, and a fill port;
a pressurizer in fluid communication with the sealable organ container operable to provide an increased internal volume for the sealable organ container in response to increased fluid pressure within the sealable organ container; and
a fluid source in fluid communication with the fill port through a fill valve,
wherein the pressurizer comprises an elastomeric material resistant to expansion and disposed in a fill line between the fill valve and the fill port.

2. The system of claim 1, wherein the sealable organ container is rigid, or wherein the organ container is plastic and becomes rigid upon being filled with fluid.

3. A method for storage of an organ, the method comprising:
providing an organ storage system comprising:
a sealable organ container comprising a vent port, and internal volume, and a fill port;
a pressurizer in fluid communication with the sealable organ container operable to provide an increased internal volume for the sealable organ container in response to increased fluid pressure within the sealable organ container; and
a fluid source in fluid communication with the fill port through a fill valve, wherein the pressurizer comprises an elastomeric material resistant to expansion and disposed in a fill line between the fill valve and the fill port;
sealing an organ within the sealable organ container;
opening the vent port;
elevating the fluid source above the sealable organ container;
opening the fill valve to allow fluid from the fluid source to flow into the sealable organ container;
closing the vent port upon fluid escaping therefrom;
energizing the pressurizer with fluid pressure from the elevated fluid source;
closing the fill valve; and
disconnecting the fluid source from the fill valve.

4. The method of claim 3, further comprising elevating the fluid source at least 50 cm above the sealable organ container.

5. The method of claim 3 or claim 4, wherein the sealable organ container is rigid; or wherein the sealable organ container is plastic and becomes rigid upon being filled with fluid.

## Patentansprüche

1. System zur Lagerung eines Organs, wobei das System umfasst:
einen abdichtbaren Organbehälter, der einen Entlüftungsanschluss, ein Innenvolumen und einen Füllanschluss umfasst; eine
Druckbeaufschlagungseinrichtung in Fluidverbindung mit dem abdichtbaren Organbehälter, die dazu betreibbar ist, als Reaktion auf einen erhöhten Fluiddruck innerhalb des abdichtbaren Organbehälters ein erhöhtes Innenvolumen für den abdichtbaren Organbehälter bereitzustellen; und
eine Fluidquelle in Fluidverbindung mit dem Füllanschluss durch ein Füllventil, wobei die Druckbeaufschlagungseinrichtung ein elastomeres Material umfasst, das expansionsresistent und in einer Füllleitung zwischen dem Füllventil und der Füllöffnung angeordnet ist.

2. System nach Anspruch 1, wobei der abdichtbare Organbehälter starr ist oder wobei der Organbehälter aus Kunststoff besteht und starr wird, wenn er mit Fluid gefüllt wird.

3. Verfahren zur Lagerung eines Organs, wobei das Verfahren umfasst:
Bereitstellen eines Organlagerungssystems, das umfasst:
einen abdichtbaren Organbehälter, der einen Entlüftungsanschluss und ein Innenvolumen und einen Füllanschluss umfasst;
eine Druckbeaufschlagungseinrichtung in Fluidverbindung mit dem abdichtbaren Organbehälter, die dazu betreibbar ist, als Reaktion auf einen erhöhten Fluiddruck innerhalb des abdichtbaren Organbehälters ein erhöhtes Innenvolumen für den abdichtbaren Organbehälter bereitzustellen; und
eine Fluidquelle in Fluidverbindung mit dem Füllanschluss durch ein Füllventil, wobei die Druckbeaufschlagungseinrichtung ein elastomeres Material umfasst, das expansionresistent und in einer Füllleitung zwischen dem Füllventil und der Füllöffnung angeordnet ist;
Abdichten eines Organs innerhalb des abdichtbaren Organbehälters;
Öffnen des Entlüftungsanschlusses;
Erhöhen der Fluidquelle über den abdichtbaren Organbehälter;
Öffnen des Füllventils, um zu ermöglichen, dass Fluid aus der Fluidquelle in den abdichtbaren Organbehälter fließt;
Schließen des Entlüftungsanschlusses, wenn Fluid daraus austritt;
Aktivieren der Druckbeaufschlagungseinrichtung mit Fluiddruck aus der erhöhten Fluidquelle;
Schließen des Füllventils; und
Trennen der Fluidquelle von dem Füllventil.

4. Verfahren nach Anspruch 3,
ferner umfassend das Erhöhen der Fluidquelle auf mindestens 50 cm über dem abdichtbaren Organbehälter.

5. Verfahren nach Anspruch 3 oder Anspruch 4,
wobei der abdichtbare Organbehälter starr ist; oder wobei der abdichtbare Organbehälter aus Kunststoff besteht und starr wird, wenn er mit Fluid gefüllt wird.

## Revendications

1. Système pour le stockage d'un organe, le système comprenant :
un contenant d'organe scellable comprenant un orifice de ventilation, un volume interne et un orifice de remplissage ;
un pressuriseur en communication fluide avec le contenant d'organe scellable permettant de fournir un volume interne accru pour le contenant d'organe scellable en réponse à une pression de fluide accrue à l'intérieur du contenant d'organe scellable ; et
une source de fluide en communication fluide avec l'orifice de remplissage à travers une soupape de remplissage, dans lequel
le pressuriseur comprend un matériau élastomère résistant à l'expansion et disposé dans une ligne de remplissage entre la soupape de remplissage et l'orifice de remplissage.

2. Système selon la revendication 1, dans lequel le contenant d'organe scellable est rigide, ou dans lequel le contenant d'organe est en plastique et devient rigide lors de son remplissage avec du fluide.

3. Procédé pour le stockage d'un organe, le procédé comprenant :
la fourniture d'un système de stockage d'organe comprenant :
un contenant d'organe scellable comprenant un orifice de ventilation, un volume interne et un orifice de remplissage ;
un pressuriseur en communication fluide avec le contenant d'organe scellable permettant de fournir un volume interne accru pour le contenant d'organe scellable en réponse à une pression de fluide accrue à l'intérieur du contenant d'organe scellable ; et
une source de fluide en communication fluide avec l'orifice de remplissage à travers une soupape de remplissage, dans lequel le pressuriseur comprend un matériau élastomère résistant à l'expansion et disposé dans une ligne de remplissage entre la soupape de remplissage et l'orifice de remplissage ;
le scellement d'un organe à l'intérieur du contenant d'organe scellable ;
l'ouverture de l'orifice de ventilation ;
l'élévation de la source de fluide au-dessus du contenant d'organe scellable ;
l'ouverture de la soupape de remplissage pour permettre au fluide provenant de la source de fluide de s'écouler dans le contenant d'organe scellable ;
la fermeture de l'orifice de ventilation lorsque du fluide s'en échappe ;
la mise sous pression du pressuriseur avec une pression de fluide provenant de la source de fluide élevée ;
la fermeture de la soupape de remplissage ; et
la séparation de la source de fluide à partir de la soupape de remplissage.

4. Procédé selon la revendication 3,
comprenant en outre l'étape consistant à élever la source de fluide à au moins 50 cm au-dessus du contenant d'organe scellable.

5. Procédé selon la revendication 3 ou la revendication 4, dans lequel le contenant d'organe scellable est rigide ; ou dans lequel le contenant d'organe scellable est en plastique et devient rigide lors de son remplissage avec du fluide.
